# EUROPEAN PATENT APPLICATION

(11) **EP 4 752 613 A1**
(43) Date of publication of application: **03.06.2026**
(21) Application number: 25220190.0
(22) Date of filing: 02.12.2025
(51) Int. Cl.: G02B 6/38

(54) **OPTICAL FIBER CONNECTOR**

(30) Priority: 02.12.2024 CN 202422959065 U
(71) Applicant: AMPHENOL TECHNOLOGY VIETNAM CO., LTD., 850000 Can Giuoc (VN)
(72) Inventor: NGUYEN, Truong Bao Huy, 850000 Can Giuoc Town, Can Giuoc District (VN); NGUYEN, Cát Viên, 850000 Can Giuoc Town, Can Giuoc District (VN); VU, Minh Hai, 850000 Can Giuoc Town, Can Giuoc District (VN)
(74) Representative: Studio Torta S.p.A.

(57) **Abstract**

An optical fiber connector includes a head sleeve, a clip portion, a quick-removal portion, and a foot sleeve all connected in sequence. A buckle is arranged on the quick-removal portion fastened to the foot sleeve, and the buckle is guided by the clip portion to be snap-fitted on a locking member of the head sleeve. Users only need to pull the foot sleeve away from an adapter to drive the locking member to be detached from the adapter, thereby achieving the removal of the optical fiber connector and the adapter. The operation is simple, and even in narrow spaces, the removal of the optical fiber connector and the adapter can be quickly achieved.

## Description

### CROSS-REFERENCE TO RELATED APPLICATIONS

The present application claims priority to Chinese Patent Application No. 202422959065.0, filed on December 02, 2024, the content of all of which is incorporated herein by reference.

### TECHNICAL FIELD

The present disclosure relates to the technical field of optical fiber connectors, in particularly to an optical fiber connector that is easily removed from an adapter in a narrow space.

### BACKGROUND

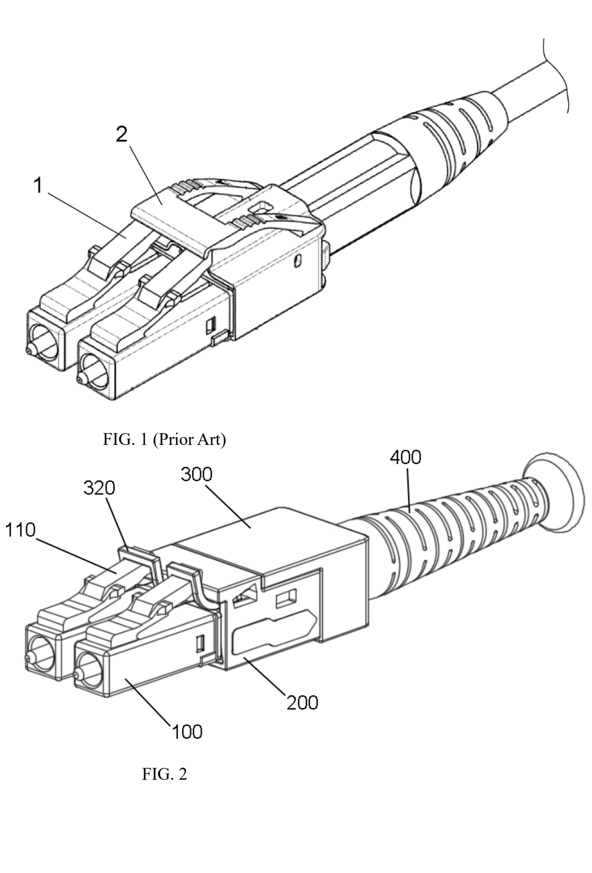

An optical fiber connector can enable segmented splicing of optical fibers and can connect an optical cable and an optical module, allowing an optical signal to be transmitted between the optical cable, the optical fibers, and the optical module through the optical fiber connector, so as to form a continuous optical path, thereby extending a transmission distance of the optical signal. The optical fiber connector is generally matched with and connected to a corresponding adapter to achieve precise splicing of two end surfaces of the optical fibers. FIG. 1 shows an optical fiber connector in the prior art, which is fastened to the adapter through a locking structure 1. When it is necessary to remove the optical fiber connector from the adapter, the locking structure 1 is detached from the adapter by pressing an elastic buckle 2. In practical applications, for the sake of cleanliness and aesthetics, the optical fiber connector and the adapter matched and connected together are generally densely arranged, resulting in a narrow space allocated to each optical fiber connector, especially a space above the optical fiber connector is small. This makes it difficult for users to press the elastic buckle when the space above the optical fiber connector in the prior art is occupied, resulting in difficulty in removing the optical fiber connector and the adapter and making it difficult to remove the optical fiber connector from the adapter quickly.

Therefore, the prior art needs to be further improved and enhanced.

### SUMMARY

In view of the above-mentioned defects of the prior art, the present disclosure provides an optical fiber connector to solve the problem that the prior art has difficulty in removing the optical fiber connector from the adapter and cannot achieve quick removal.

To solve the above problem, the present disclosure provides an optical fiber connector, including a head sleeve, a clip portion, a quick-removal portion, and a foot sleeve all connected in sequence;
where a top part of the head sleeve is arranged with a locking member, and the optical fiber connector is fastened to an adapter through the locking member;
the clip portion includes a clip portion body and a clip portion protrusion arranged at a top part of the clip portion body, the clip portion body is a hollow structure with two open ends, an accommodation space is formed inside the clip portion body, and one side of the clip portion protrusion facing the quick-removal portion is arranged with an opening and is connected to the accommodation space; and
the quick-removal portion includes a quick-removal portion body and a buckle arranged at a top part of the quick-removal portion body, the quick-removal portion body is fastened to the foot sleeve, the buckle passes through the opening of the clip portion protrusion, and after the buckle passes through the accommodation space, the buckle is snap-fitted on the locking member of the head sleeve, so that when the foot sleeve moves away from the adapter, the buckle drives the locking member to be detached from the adapter, achieving removal of the optical fiber connector and the adapter.

In some embodiments, a top end of the locking member protrudes to form a snap hook, the buckle is an elastic buckle, and after the buckle passes through the opening of the clip portion protrusion and the accommodation space, the buckle bends upwards to be hooked onto the snap hook, achieving a snap-fit connection between the buckle and the locking member.

In some embodiments, a side wall of the clip portion protrusion is arranged with a snap slot, a snap protrusion is arranged on a side surface of the buckle corresponding to the snap slot, after the buckle passes through the opening of the clip portion protrusion, the snap protrusion is snapped into the snap slot and can slide in the snap slot to guide the buckle passing through the accommodation space to be snap-fitted on the locking member.

In some embodiments, a top surface of the snap slot is a tilted surface, and the tilted surface is tilted downwards from one end of the snap slot close to the opening to one end of the snap slot deviating from the opening, so as to guide the buckle to move downwards when the buckle passes through the accommodation space, so that the buckle is located below the snap hook after the buckle passes through the accommodation space, and bends upwards to be hooked onto the snap hook.

In some embodiments, the foot sleeve is a hollow cylindrical structure, including a foot-sleeve first end facing the quick-removal portion and a foot-sleeve second end deviating from the quick-removal portion, a surface of the foot-sleeve first end vertically and radially protrudes to form a snap annular protrusion, and the foot sleeve is snap-fitted on the quick-removal portion through the snap annular protrusion.

In some embodiments, an inner wall of the quick-removal portion body is arranged with a fixation slot, the fixation slot corresponds to the snap annular protrusion, a snap-fit connection between the quick-removal portion and the foot sleeve is achieved by matching the fixation slot with the snap annular protrusion.

In some embodiments, a cross-section of the snap annular protrusion perpendicular to an axial direction of the foot sleeve is substantially rectangular, the fixation slot is two parallel fixation slots respectively arranged on two opposite inner walls of the quick-removal portion body, and the two parallel fixation slots are respectively matched with two edges of the snap annular protrusion, so as to achieve the snap-fit connection between the quick-removal portion and the foot sleeve.

In some embodiments, one end of the quick-removal portion body facing the foot sleeve is arranged with a circular cutout, the circular cutout is arranged outside the fixation slot, and when the fixation slot is matched with the snap annular protrusion, the circular cutout is snap-fitted on the foot-sleeve first end.

In some embodiments, a surface of the foot-sleeve second end is radially arranged with a plurality of cuts, and each cut extends in a circumference of the foot-sleeve second end to form a rib between adjacent cuts.

In some embodiments, the optical fiber connector further includes a bifurcation sleeve arranged inside the accommodation space, where one end of the bifurcation sleeve is connected to the head sleeve, an other end of the bifurcation sleeve is connected to the foot sleeve through an optical fiber hoop, and an optical fiber passing through the foot sleeve is divided into a plurality of strands correspondingly inserted into a plurality of head sleeves respectively.

The present disclosure provides the optical fiber connector, including the head sleeve, the clip portion, the quick-removal portion, and the foot sleeve all connected in sequence. The top part of the head sleeve is arranged with the locking member, and the optical fiber connector is fastened to the adapter through the locking member. The clip portion includes the clip portion body and the clip portion protrusion arranged on the top part of the clip portion body. The clip portion body is the hollow structure with the two open ends. The accommodation space is arranged inside the clip portion body. The one side of the clip portion protrusion facing the quick-removal portion is arranged with the opening, and the opening is connected to and communicates with the accommodation space. The quick-removal portion includes the quick-removal portion body and the buckle arranged on the top part of the quick-removal portion body. The quick-removal portion body is fastened to the foot sleeve. The buckle passes through the opening of the clip portion protrusion and is snap-fitted on the locking member of the head sleeve after passing through the accommodation space. When the foot sleeve moves away from the adapter, the buckle drives the locking member to be detached from the adapter, achieving the removal of the optical fiber connector and the adapter. In the present disclosure, the buckle is arranged on the quick-removal portion fastened to the foot sleeve, and the buckle is guided by the clip portion to be snap-fitted on the locking member of the head sleeve. Users only need to pull the foot sleeve away from the adapter to drive the locking member to be detached from the adapter, thereby achieving the removal of the optical fiber connector and the adapter. The operation is simple, and even in narrow spaces, the removal of the optical fiber connector and the adapter can be quickly achieved.

### BRIEF DESCRIPTION OF DRAWINGS

In order to provide a clearer explanation of the technical solutions in the embodiments of the present disclosure or in the prior art, a brief description is given to the accompanying drawings required for the description of the present embodiments or the prior art. It is obvious that the accompanying drawings described below are only some embodiments of the present disclosure. For those skilled in the art, other drawings can be obtained based on the present drawings without creative efforts.
FIG. 1 is a schematic diagram of a perspective view of an optical fiber connector in the prior art.
FIG. 2 is a schematic diagram of a perspective view of an optical fiber connector in an implementation of the present disclosure.
FIG. 3 is a schematic diagram of an exploded view of the optical fiber connector in an implementation of the present disclosure.
FIG. 4 is a schematic diagram of a perspective view of a clip portion of the optical fiber connector in an implementation of the present disclosure.
FIG. 5 is a schematic diagram of a perspective view of a quick-removal portion of the optical fiber connector in an implementation of the present disclosure.
FIG. 6 is a schematic diagram of another perspective view of the quick-removal portion of the optical fiber connector in an implementation of the present disclosure.
FIG. 7 is a schematic diagram of the quick-removal portion fastened to a foot sleeve of the optical fiber connector in an implementation of the present disclosure.
FIG. 8 is a schematic diagram of a perspective view of the foot sleeve of the optical fiber connector in an implementation of the present disclosure.
FIG. 9 is a schematic diagram of a cross-sectional view of the optical fiber connector fastened to an adapter in an implementation of the present disclosure.
FIG. 10 is a schematic diagram of a cross-sectional view of the optical fiber connector separated from the adapter in an implementation of the present disclosure.

### DETAILED DESCRIPTION OF EMBODIMENTS

The present disclosure provides an optical fiber connector. In order to make the purposes, technical solutions, and effects of the present disclosure clearer and more specific, the following provides a further detailed explanation of the present disclosure. It should be understood that the embodiments described here are only used to explain the present disclosure and are not intended to limit the present disclosure.

It should be noted that the terms "center", "up", "down", "left", "right", "inside", "outside", "perpendicular", "horizontal" and other directional or positional relationships indicated are based on the directional or positional relationships shown in the accompanying drawings, only for the convenience of describing the present disclosure and simplifying the description, and do not indicate or imply that the structure referred to must have a specific orientation or must be constructed in a specific orientation, and cannot be understood as limiting the present disclosure.

In addition, unless there are special limitations on articles in the specification otherwise, "a", "an", "said", and "the" can refer to one or more than one. If there are descriptions related to "first", "second", etc. in the embodiments of the present disclosure, the descriptions of "first", "second", etc. are only for descriptive purposes and cannot be understood as indicating or implying their relative importance or implying the number of technical features indicated. Therefore, the features that are limited to "first", "second", etc. can explicitly or implicitly include at least one of these features. In addition, the technical solutions between various embodiments can be combined with each other, but they must be based on the ability of those skilled in the art to implement them. When the combination of technical solutions is contradictory or impossible to achieve, it should be considered that this combination of technical solutions does not exist and is not within the protection scope required by the present disclosure.

Those skilled in the art can understand that, unless otherwise defined, all terms used here (including technical and scientific terms) have the same meaning as those generally understood by those skilled in the art to which the present disclosure belongs. It should be understood that terms such as those defined in general dictionaries should be understood to have meanings consistent with those in the prior art. Unless specifically defined as here otherwise, the terms are not explained with idealized or overly formal meanings.

In the prior art, users need to manually press a locking structure of an optical fiber connector to remove the optical fiber connector from an adapter. This increases the difficulty of removing the optical fiber connector from the adapter when a space above the optical fiber connector is occupied, making it impossible to achieve quick removal of the optical fiber connector and the adapter.

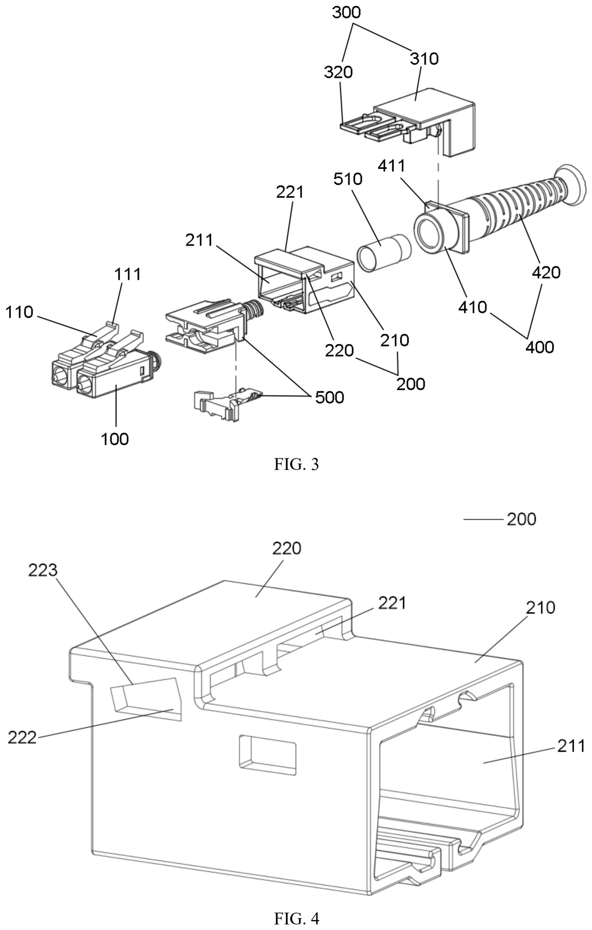

Therefore, the present disclosure discloses an optical fiber connector that can be quickly removed from the adapter even in narrow spaces. As shown in FIG. 2 and FIG. 3, the optical fiber connector includes a head sleeve 100, a clip portion 200, a quick-removal portion 300, and a foot sleeve 400 all sequentially connected. A top part of the head sleeve 100 is arranged with a locking member 110, and the optical fiber connector is fastened to the adapter through the locking member 110. The clip portion 200 includes a clip portion body 210 and a clip portion protrusion 220 that is arranged on a top part of the clip portion body 210. The clip portion body 210 is a hollow structure with two open ends, and an accommodation space 211 is formed inside the clip portion body 210. One side of the clip portion protrusion 220 has an opening 221 facing the quick-removal portion 300 and is connected to the accommodation space 211. The quick-removal portion 300 includes a quick-removal portion body 310 and a buckle 320 that is arranged on a top part of the quick-removal portion body 310. The quick-removal portion body 310 is fastened to the foot sleeve 400. The buckle 320 passes through the opening 221 of the clip portion protrusion 220, then passes through the accommodation space 211, and then is snap-fitted on the locking member 110 on the head sleeve 100. When the foot sleeve 400 moves away from the adapter, the buckle 320 drives the locking member 110 to be detached from the adapter, achieving the removal of the optical fiber connector and the adapter. By setting the buckle 320 on the quick-removal portion 300 fastened to the foot sleeve 400, and using the clip portion 200 to guide the buckle 320 to be snap-fitted on the locking member 110 on the head sleeve 100, users only need to pull the foot sleeve 400 away from the adapter to drive the locking member 110 to be detached from the adapter, thus achieving the removal of the optical fiber connector and the adapter. The operation is simple, and even in narrow spaces, the removal of the optical fiber connector and the adapter can be quickly achieved.

In one implementation, as shown in FIG. 3, a top end of the locking member 110 protrudes to form a snap hook 111, and the buckle 320 is an elastic buckle. After passing through the opening 221 of the clip portion protrusion 220 and the accommodation space 211, the buckle 320 bends upwards to be hooked onto the snap hook 111, achieving a snap-fit connection between the buckle 320 and the locking member 110. By fastening an upper surface of the locking member 110 to the adapter, and then using the buckle 320 to be hooked onto the snap hook 111 at the top of the locking member 110, when the buckle 320 moves away from the locking member 110, the buckle 320 automatically applies a downward force to the locking member 110, thereby promoting the detachment of the upper surface of the locking member 110 from the adapter and achieving the removal of the optical fiber connector and the adapter.

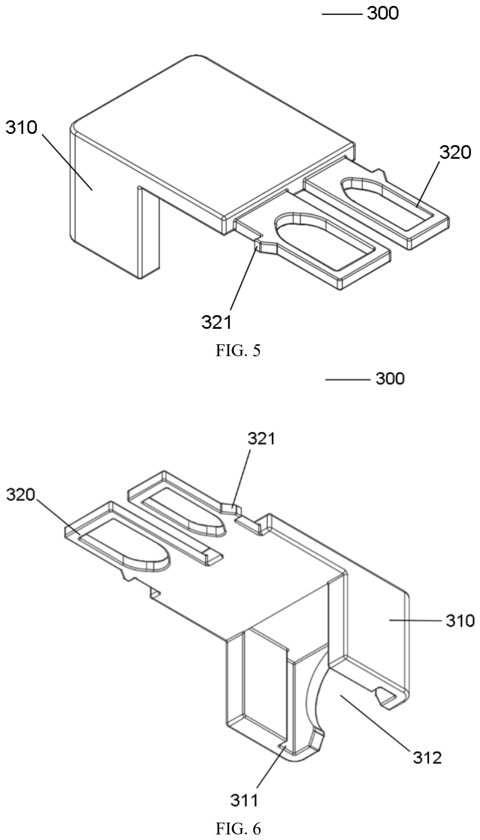

In one implementation, as shown in FIG. 4 and FIG. 5, a snap slot 222 is arranged on a side wall of the clip portion protrusion 220, and a snap protrusion 321 is arranged on a side surface of the buckle 320 corresponding to the snap slot 222. After the buckle 320 passes through the opening 221 of the clip portion protrusion 220, the snap protrusion 321 is snapped into the snap slot 222 and can slide in the snap slot 222 to guide the buckle 320 to pass through the accommodation space 211, so that the buckle 320 is snap-fitted on the locking member 110. By cooperating with the snap protrusion 321 and the snap slot 222, it is convenient to position the buckle 320 and the clip portion 200 mutually during installation, and it can also limit the movement of the buckle 320 during use, avoiding the buckle 320 from coming out of the clip portion 200 when the foot sleeve 400 is pulled.

In one implementation, as shown in FIG. 4, a top surface of the snap slot 222 is a tilted surface 223, which is tilted downwards from one end of the snap slot close to the opening 221 to the other end of the snap slot deviating from the opening 221, so as to guide the buckle 320 to move downwards when the buckle 320 passes through the accommodation space 211, so that the buckle 320 is located below the snap hook 111 after the buckle passes through the accommodation space 211 and and needs to bend upwards to be snap-fitted on the snap hook 111. By guiding the position of the buckle 320 through the tilted surface 223 of the snap slot 222, it is ensured that the buckle 320 is located below the snap hook 111 of the locking member 110 after installation, and the buckle 320 needs to bend upwards to be hooked onto the snap hook 111, so that when the buckle 320 moves away from the adapter, the buckle 320 automatically applies the downward force to the locking member 110, thereby detaching the buckle 320 from the adapter, which is convenient and quick.

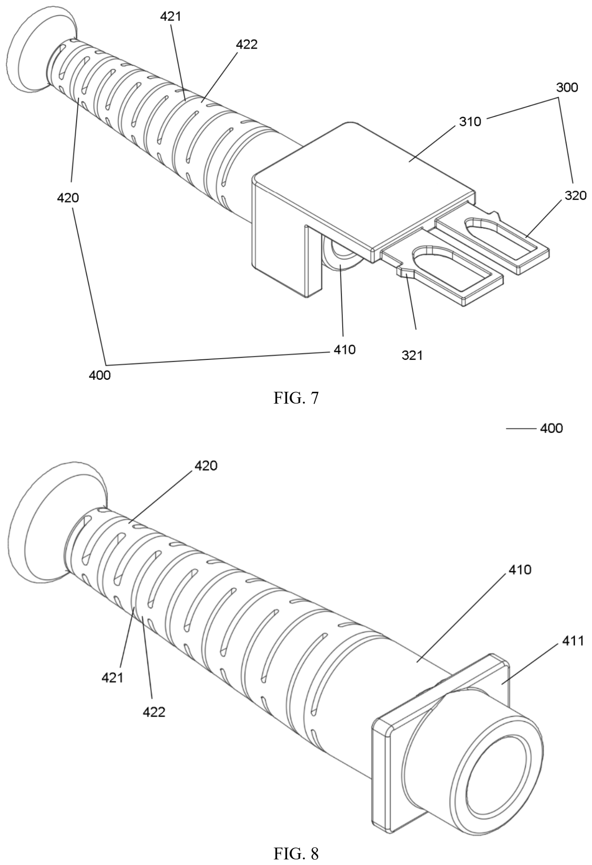

In one implementation, as shown in FIG. 8, the foot sleeve 400 is a hollow cylindrical structure, including a foot-sleeve first end 410 facing the quick-removal portion 300 and a foot-sleeve second end 420 deviating from the quick-removal portion 300. A surface of the foot-sleeve first end 410 vertically and radially protrudes to form a snap annular protrusion 411, and the foot sleeve 400 is snap-fitted on the quick-removal portion 300 through the snap annular protrusion 411. By using the snap-fit connection between the snap annular protrusion 411 and the quick-removal portion 300, when the foot sleeve 400 is pulled, the quick-removal portion 300 moves along with the foot sleeve 400, so that the buckle 320 applies the downward force to the locking member 110 to achieve the removal of the optical fiber connector and adapter.

In one embodiment, as shown in FIG. 6, an inner wall of the quick-removal portion body 310 is arranged with a fixation slot 311 that corresponds to the snap annular protrusion 411. The snap-fit connection between the quick-removal portion 300 and the foot sleeve 400 is achieved by the fixation slot 311 matched with the snap annular protrusion 411. By the fixation slot 311 matched with the snap annular protrusion 411, the snap-in connection between the foot sleeve 400 and the quick-removal portion 300 is achieved, which increases the stability of the snap-fit connection and ensures that the quick-removal portion 300 can move synchronously along with the foot sleeve 400.

In one implementation, as shown in FIG. 8, a cross-section of the snap annular protrusion 411 perpendicular to an axial direction of the foot sleeve 400 is substantially rectangular. The fixation slot 311 is two parallel fixation slots respectively arranged on two opposite inner walls of the quick-removal portion body 310. The two parallel fixation slots are configured to be respectively matched with two edges of the snap annular protrusion 411, so as to achieve the snap-fit connection between the quick-removal portion 300 and the foot sleeve 400. By setting the rectangular snap annular protrusion 411 and its corresponding parallel fixation slots 311, the stability of the snap-fit connection between the foot sleeve 400 and the quick-removal portion 300 is further improved, while facilitating alignment and installation.

In one implementation, as shown in FIG. 6, one end of the quick-removal portion body 310 facing the foot sleeve 400 is arranged with a circular cutout 312. The circular cutout 312 is arranged at an outside of the fixation slot 311. When the fixation slot 311 is matched with the snap annular protrusion 411, the circular cutout 312 is snap-fitted on the foot-sleeve first end 410. An inner diameter of the circular cutout 312 is matched with an outer diameter of the foot-sleeve first end 410. The circular cutout 312 configured to be snap-fitted on the foot-sleeve first end 410, and the snap annular protrusion 411 snapped into the fixation slot 311 both cooperate together to make the snap-fit connection between the quick-removal portion 300 and the foot sleeve 400 more stable.

In one implementation, as shown in FIG. 7 and FIG. 8, a surface of the foot-sleeve second end 420 is radially provided with a plurality of cuts 421, and each cut 421 extends in a circumference of the foot-sleeve second end 420, forming a rib 422 between any two adjacent cuts 421. Using the cuts 421 to form ribs 422 on the surface of the foot-sleeve second end 420, increases a frictional force on the surface of the foot-sleeve second end 420, making it easier for users to pull the foot sleeve 400 to remove the optical fiber connector from the adapter.

In one implementation, as shown in FIG. 3, the optical fiber connector further includes a bifurcation sleeve 500 that is arranged inside the accommodation space 211. One end of the bifurcation sleeve 500 is connected to the head sleeve 100, and the other end of the bifurcation sleeve 500 is connected to the foot sleeve 400 through an optical fiber hoop 510. An optical fiber passing through the foot sleeve 400 is divided into a plurality of strands that are correspondingly inserted into a plurality of head sleeves 100 respectively. The plurality of head sleeves 100 can be matched with the bifurcation sleeve 500, thereby expanding an optical fiber interface to meet the needs of different scenarios.

Therefore, the optical fiber connector disclosed in the present disclosure can be removed from the adapter by specific structural settings, so that users only need to pull the foot sleeve to move away from the adapter to achieve the removal of the optical fiber connector and the adapter, and even in narrow spaces the convenient and fast removal operation can be achieved.

The following describes details of the optical fiber connector disclosed in the present disclosure in conjunction with an embodiment. As shown in FIG. 3, the optical fiber connector disclosed in the present disclosure includes a head sleeve 100, a clip portion 200, a bifurcation sleeve 500, a quick-removal portion 300, and a foot sleeve 400. An optical fiber passes through the foot sleeve 400, the quick-removal portion 300, the bifurcation sleeve 500, the clip portion 200, and the head sleeve 100 in sequence to be connected to an optical fiber inside an adapter.

As shown in FIG. 2 and FIG. 3, the head sleeve 100 is a hollow structure for the optical fiber to pass through, so that the optical fiber is matched with and connected to the corresponding optical fiber inside the adapter. Furthermore, a top part of the head sleeve 100 is arranged with a locking member 110, which is an elastic structure. One end of the locking member 110 is fixed on the top part of the head sleeve 100, and the other end of the locking member 110 can move vertically to achieve a fastening connection and removal of the optical fiber connector and the adapter.

As shown in FIG. 3, the clip portion 200 is arranged between the head sleeve 100 and the quick-removal portion 300, and configured to guide a buckle 320 arranged on the quick-removal portion 300 to be snap-fitted on the locking member 110 on the front sleeve 100. As shown in FIG. 4, the clip portion 200 includes a clip portion body 210 and a clip portion protrusion 220. The clip portion body 210 is a hollow structure with two open ends, and an accommodation space 211 is formed inside the clip portion body 210 to accommodate the bifurcation sleeve 500. One end of the bifurcation sleeve 500 is connected to the head sleeve 100, and the other end of the bifurcation sleeve 500 is connected to the foot sleeve 400 through an optical fiber hoop 510. The optical fiber passing through the foot sleeve 400 is divided by the bifurcation sleeve 500 into a plurality of strands that are correspondingly inserted into a plurality of head sleeves 100 respectively. In the present embodiment, the number of head sleeves 100 is two, and the bifurcation sleeve 500 divides the optical fiber into two strands that are inserted into the head sleeves 100 respectively. It should be noted that the two head sleeves 100 are only one feasible implementation of the present disclosure, and more than two head sleeves 100 can be set as needed, and the optical fiber can be divided into more than two strands by the bifurcation sleeve 500.

Furthermore, as shown in FIG. 4, the clip portion protrusion 220 is vertically formed on a top surface of the clip portion body 210, and an inside of the clip portion protrusion 220 is connected to and communicates with the accommodation space 211. One side of the clip portion protrusion 220 facing the quick-removal portion 300 is arranged with an opening 221, configured for the buckle 320 on the quick-removal portion 300 passing through the opening 221. Furthermore, a snap slot 222 is arranged on the side wall of the clip portion protrusion 220, and a top surface of the snap slot 222 is a tilted surface 223. The tilted surface 223 is a tilted surface that is gradually tilted downwards from the opening 221 to a distance deviating from the opening 221, and configured to guide the buckle 320 entering the clip portion protrusion 220 to move downwards, thereby ensuring that the buckle 320 needs to bend upwards to be hooked onto the snap hook 111 of the locking member 110.

Furthermore, as shown in FIG. 3, the quick-removal portion 300 is arranged between the clip portion 200 and the foot sleeve 400. As shown in FIG. 5 and FIG. 6, the quick-removal portion 300 includes a quick-removal portion body 310 and the buckle 320. The buckle 320 is an elastic structure and extends horizontally from a top surface of the quick-removal portion body 310, so that when the quick-removal portion 300 is installed between the clip portion 200 and the foot sleeve 400, the buckle 320 can pass through the clip portion 200 and then is snap-fitted on the locking member 110 of the head sleeve 100. Furthermore, as shown in FIG. 5, a side surface of the buckle 320 is arranged with a snap protrusion 321, which corresponds to a snap slot 222 on the clip portion protrusion 220. When the buckle 320 passes through the opening 221, then enters into the accommodation space 211, and then extends towards the locking member 110 of the head sleeve 100, the snap protrusion 321 is guided by the tilted surface 223 arranged on the snap slot 222 to make the buckle 320 move downwards to be located below the locking member 110, where the buckle 320 must bend upwards to be hooked onto the snap hook 111 of the locking member 110. Therefore, when the buckle 320 moves away from the adapter, the buckle 320 applies a downward force to the locking member 110, thereby detaching the locking member 110 from the adapter and achieving the removal of the optical fiber connector and the adapter.

Furthermore, as shown in FIG. 6, the quick-removal portion body 310 includes a front end connected to the buckle 320 and a rear end corresponding to the foot sleeve 400. The front end of the quick-removal portion body 310 is a horizontal plate, which is integrated with the buckle 320. A circular cutout 312 is arranged on the rear end of the quick-removal portion body 310 corresponding to the foot sleeve 400. An inner diameter of the circular cutout 312 matches an outer diameter of the foot sleeve 400, and an opening of the circular cutout 312 facing the foot sleeve 400 is arranged slightly smaller than the outer diameter of the foot sleeve 400, so that the quick-removal portion body 310 can be snap-fitted on the foot sleeve 400 through the circular cutout 312.

Furthermore, as shown in FIG. 6, two parallel fixation slots 311 are respectively arranged on inner sides of the quick-removal portion body 310 in the vertical direction. The two parallel fixation slots are matched with corresponding snap annular protrusions 411 on the foot sleeve 400 to achieve a snap-fit connection and positioning of the quick-removal portion body 310 and the foot sleeve 400.

Furthermore, as shown in FIG. 7 and FIG. 8, the foot sleeve 400 includes a foot-sleeve first end 410 and a foot-sleeve second end 420, where a surface of the foot-sleeve first end 410 is smooth, and the snap annular protrusion 411 is arranged at a position of the foot-sleeve first end 410 corresponding to the fixation slot 311. As shown in FIG. 8, a cross-section of the snap annular protrusion 411 perpendicular to an axial direction of the foot sleeve 400 is substantially rectangular, which is configured to be match with the two parallel fixation slots 311, thereby achieving the snap-fit connection and positioning of the quick-removal portion 300 and the foot sleeve 400. The circular cutout 312 is correspondingly snap-fitted on one side of the foot-sleeve first end 410 deviating from the quick-removal portion 300 relative to the snap annular protrusion 411. The positioning and snap-fit connection of the quick-removal portion 300 and the foot sleeve 400 are achieved through the circular cutout 312, the fixation slots 311, and the snap annular protrusion 411.

Furthermore, as shown in FIG. 7, a surface of the foot-sleeve second end 420 is arranged with parallel cuts 421 along the axial direction, and the cuts 421 are cuts formed around the surface of the foot-sleeve second end 420 in the circumference of the foot sleeve 400, thereby forming a rib 422 between any two adjacent cuts 421. The ribs 422 are formed parallel to the axial direction on the surface of the foot-sleeve second end 420, thereby increasing a frictional force on the surface of the foot-sleeve second end 420 and facilitating users to pull the foot-sleeve second end 420, so as to drive the buckle 320 to apply the downward force to the locking member 110, thus achieving the quick removal of the optical fiber connector and the adapter.

A mechanism of the optical fiber connector disclosed in the present disclosure when separated from the adapter is explained in conjunction with the accompanying drawings.

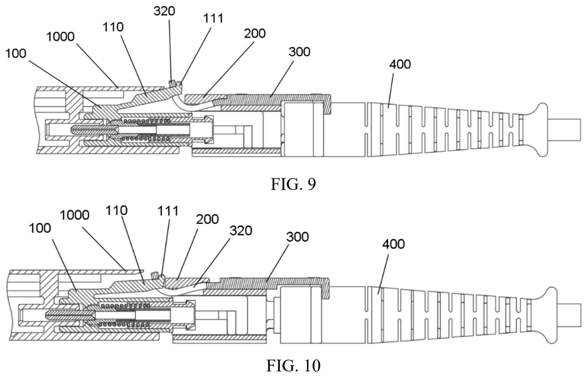

As shown in FIG. 9, when the optical fiber connector disclosed in the present disclosure is connected to the adapter, the locking member 110 on the head sleeve 100 is fastened and fixed to the adapter 1000, achieving a fixed connection between the optical fiber connector and the adapter. At this time, the buckle 320 on the quick-removal portion 300 passes through the clip portion 200 and then is snap-fitted on the locking member 110. Under the guidance of the clip portion 200, the buckle 320 first extends downwards and then bends upwards to be hooked onto the snap hook 111 on the top end of the locking member 110. As shown in FIG. 10, when it is necessary to remove the optical fiber connector from the adapter 1000, users simply pull the foot sleeve 400 in the direction deviating from the adapter 1000 (i.e. the right in FIG. 10). At this time, the buckle 320 and the quick-removal portion 300 synchronously follow the foot sleeve 400 to move to the right. The buckle 320 is hooked onto the snap hook 111 and drives the locking member 110 to move. At this time, under the guidance of the clip portion 200, the buckle 320 needs to first move downwards and then move to the right, thereby applying the downward force to the locking member 110, causing the locking member 110 to be detached from the adapter 1000, thereby achieving the removal of the optical fiber connector and the adapter. Due to that it only needs to pull the optical fiber connector horizontally, even in situations where spaces around the optical fiber connector are narrow, the removal of the optical fiber connector and the adapter can still be easily and quickly achieved, with simple operation and easy application.

In summary, the present disclosure provides the optical fiber connector, including the head sleeve, the clip portion, the quick-removal portion, and the foot sleeve all connected in sequence. The top part of the head sleeve is arranged with the locking member, and the optical fiber connector is fastened to the adapter through the locking member. The clip portion includes the clip portion body and the clip portion protrusion arranged on the top part of the clip portion body. The clip portion body is the hollow structure with the two open ends. The accommodation space is arranged inside the clip portion body. The one side of the clip portion protrusion facing the quick-removal portion is arranged with the opening, and the opening is connected to and communicates with the accommodation space. The quick-removal portion includes the quick-removal portion body and the buckle arranged on the top part of the quick-removal portion body. The quick-removal portion body is fastened to the foot sleeve. The buckle passes through the opening of the clip portion protrusion and is snap-fitted on the locking member of the head sleeve after passing through the accommodation space. When the foot sleeve moves away from the adapter, the buckle drives the locking member to be detached from the adapter, achieving the removal of the optical fiber connector and the adapter. In the present disclosure, the buckle is arranged on the quick-removal portion fastened to the foot sleeve, and the buckle is guided by the clip portion to be snap-fitted on the locking member of the head sleeve. Users only need to pull the foot sleeve away from the adapter to drive the locking member to be detached from the adapter, thereby achieving the removal of the optical fiber connector and the adapter. The operation is simple, and even in narrow spaces, the removal of the optical fiber connector and the adapter can be quickly achieved.

The above is only some embodiments of the present disclosure and is not intended to limit the present disclosure. Any modifications, equivalent substitutions, improvements, etc. made within the spirits and principles of the present disclosure should be included in the protection scope of the present disclosure.

## Claims

1. An optical fiber connector, comprising a head sleeve, a clip portion, a quick-removal portion, and a foot sleeve all connected in sequence;
wherein a top part of the head sleeve is arranged with a locking member, and the optical fiber connector is fastened to an adapter through the locking member;
the clip portion comprises a clip portion body and a clip portion protrusion arranged at a top part of the clip portion body, the clip portion body is a hollow structure with two open ends, an accommodation space is formed inside the clip portion body, and one side of the clip portion protrusion facing the quick-removal portion is arranged with an opening and is connected to the accommodation space; and
the quick-removal portion comprises a quick-removal portion body and a buckle arranged at a top part of the quick-removal portion body, the quick-removal portion body is fastened to the foot sleeve, the buckle passes through the opening of the clip portion protrusion, and after the buckle passes through the accommodation space, the buckle is snap-fitted on the locking member of the head sleeve, so that when the foot sleeve moves away from the adapter, the buckle drives the locking member to be detached from the adapter, achieving removal of the optical fiber connector and the adapter.

2. The optical fiber connector according to claim 1, wherein a top end of the locking member protrudes to form a snap hook, the buckle is an elastic buckle, and after the buckle passes through the opening of the clip portion protrusion and the accommodation space, the buckle bends upwards to be hooked onto the snap hook, achieving a snap-fit connection between the buckle and the locking member.

3. The optical fiber connector according to claim 2, wherein a side wall of the clip portion protrusion is arranged with a snap slot, a snap protrusion is arranged on a side surface of the buckle corresponding to the snap slot, after the buckle passes through the opening of the clip portion protrusion, the snap protrusion is snapped into the snap slot and can slide in the snap slot to guide the buckle passing through the accommodation space to be snap-fitted on the locking member.

4. The optical fiber connector according to claim 3, wherein a top surface of the snap slot is a tilted surface, and the tilted surface is tilted downwards from one end of the snap slot close to the opening to one end of the snap slot deviating from the opening, so as to guide the buckle to move downwards when the buckle passes through the accommodation space, so that the buckle is located below the snap hook after the buckle passes through the accommodation space, and bends upwards to be hooked onto the snap hook.

5. The optical fiber connector according to claim 1, wherein the foot sleeve is a hollow cylindrical structure, comprising a foot-sleeve first end facing the quick-removal portion and a foot-sleeve second end deviating from the quick-removal portion, a surface of the foot-sleeve first end vertically and radially protrudes to form a snap annular protrusion, and the foot sleeve is snap-fitted on the quick-removal portion through the snap annular protrusion.

6. The optical fiber connector according to claim 5, wherein an inner wall of the quick-removal portion body is arranged with a fixation slot, the fixation slot corresponds to the snap annular protrusion, a snap-fit connection between the quick-removal portion and the foot sleeve is achieved by matching the fixation slot with the snap annular protrusion.

7. The optical fiber connector according to claim 6, wherein a cross-section of the snap annular protrusion perpendicular to an axial direction of the foot sleeve is substantially rectangular, the fixation slot is two parallel fixation slots respectively arranged on two opposite inner walls of the quick-removal portion body, and the two parallel fixation slots are respectively matched with two edges of the snap annular protrusion, so as to achieve the snap-fit connection between the quick-removal portion and the foot sleeve.

8. The optical fiber connector according to claim 6, wherein one end of the quick-removal portion body facing the foot sleeve is arranged with a circular cutout, the circular cutout is arranged outside the fixation slot, and when the fixation slot is matched with the snap annular protrusion, the circular cutout is snap-fitted on the foot-sleeve first end.

9. The optical fiber connector according to claim 5, wherein a surface of the foot-sleeve second end is radially arranged with a plurality of cuts, and each cut extends in a circumference of the foot-sleeve second end to form a rib between adjacent cuts.

10. The optical fiber connector according to claim 1, further comprising a bifurcation sleeve arranged inside the accommodation space, wherein one end of the bifurcation sleeve is connected to the head sleeve, an other end of the bifurcation sleeve is connected to the foot sleeve through an optical fiber hoop, and an optical fiber passing through the foot sleeve is divided into a plurality of strands correspondingly inserted into a plurality of head sleeves respectively.
